# EUROPEAN PATENT SPECIFICATION

(11) **EP 0 809 758 B1**
(45) Date of publication and mention of the grant of the patent: **05.01.2000**
(21) Application number: 96901655.9
(22) Date of filing: 13.02.1996
(51) Int. Cl.: F16B 13/06

(54) **MASONRY ANCHOR**
MAUERWERK-ANKER
CHEVILLE POUR MACONNERIE

(30) Priority: 17.02.1995 AU PN119095
(43) Date of publication of application: 03.12.1997
(73) Proprietor: RAMSET FASTENERS (AUST.) PTY. LTD., Croydon North, VIC 3136 (AU)
(72) Inventor: CLARK, Philip, Charles, Vermont South, VIC 3133 (AU)
(74) Representative: Bibby, William Mark
(86) International application number: AU9600073
(87) International publication number: WO9625601

(56) References cited:
- WO-A-84/01005
- AU-A- 1 819 183
- AU-A- 2 116 283
- AU-A- 8 392 191
- DE-A- 3 023 411
- GB-A- 1 170 762
- GB-A- 1 217 850
- US-A- 3 750 519
- US-A- 4 720 224

## Description

The present invention relates to a masonry anchor of expansion type and more particularly to an expansion sleeve for use in such an anchor.

Masonry anchors of expansion type conventionally comprise a cylindrical expansion sleeve formed of metal with slits extending longitudinally from the inner or forward end of the sleeve to respective circumferentially spaced apertures in the sleeve. The sleeve is mounted over the shank of a bolt having at its forward end a conical element of external diameter greater than the internal diameter of the sleeve. In use, the anchor is placed into a cylindrical cavity drilled into masonry and the conical element is drawn into the inner end portion of the sleeve by tightening the bolt. This action causes the inner end portion of the sleeve to expand outwardly into tight anchoring engagement with the cylindrical wall of the hole.

A masonry anchor of the type described above is described in detail in our Australian patent No. 559285 (18191/83 - WO 84/01005). In the construction described in this earlier patent, the circumferentially spaced apertures formed in the expansion sleeve are of elongate shape with rounded ends, with the major axis of each aperture extending at an acute angle to the axial plane of the sleeve, typically an angle of between about 20 and 45° to the axial plane. The configuration of the apertures is such as to cause axial contraction of the expansion sleeve during tightening of the bolt. The contraction in axial length occurs by deformation of the circumferentially-spaced apertures which causes the rear or outer end of the sleeve to move towards the inner or forward end. This axial contraction of the expansion sleeve is termed "pull-down". One reason for incorporating a pull-down feature is to enable a gap to be taken up between an object being clamped and the surface of the masonry as may exist for example if a component with a slight bow is being clamped. Another reason is to enable final tightening of the anchor to be translated into a high compression or clamping force between the component and the surface of the masonry rather than in compressing the sleeve. A high compression or clamping force between the component and the surface of the masonry is particularly important when the component is subjected to cyclic loading.

As a result of substantial investigations we have carried out into the functioning of masonry anchors of this type, we have determined that it is beneficial for pull-down, or axial contraction of the expansion sleeve, to occur at a torque substantially below the final torque setting of the anchor and in particular at approximately 30 to 50% of the final torque. With a configuration which provides this effect, the initial part of the applied torque serves to draw the conical expansion element into the inner end of the sleeve to cause expansion of the sleeve and hence setting of the anchor within the hole; further torque applied after that causes pull-down by axial contraction of the sleeve so that the component is drawn into firm engagement with the surface of the masonry and the remaining 50% or more of the torque is used to generate high axial loading in the bolt so that this is translated directly into compressive loading between the component and the surface of the masonry and which is permitted by further axial contraction of the sleeve, albeit relatively small axial contraction, considerably less than that which took place to draw the component down.

Although the sleeve configuration described in our aforesaid patent has effective pull-down characteristics, in some instances pull-down consequent on axial contraction of the sleeve might not take place until the applied torque is significantly within the upper part of its range. In particular, anchors of this type are produced in a large range of sizes, and for the range of anchors the expansion sleeve diameter may range from only a few millimetres to 20 millimetres or more. In practice it has proved difficult to determine accurately at the design stage the likely loading and hence likely torque at which pull-down is likely to take place, and also the maximum possible length of pull-down, and this type of information can only be determined empirically by extensive testing of each size and type of sleeve produced within the range.

We have now determined that by refining the shape of the circumferentially spaced apertures in the sleeve it is possible at the design stage to design the sleeve with pull-down characteristics which are not only more predictable and determinable at the design stage but also which can occur somewhat lower in the overall torque range applicable to the anchor.

According to the present invention there is provided an expansion sleeve for a masonry anchor, said sleeve having a plurality of circumferentially-spaced apertures intermediate the ends of the sleeve, and a plurality of slits each extending longitudinally from one of the ends to a respective one of the apertures, said apertures being so shaped that a land is defined between adjacent apertures, said land being elongate and having an axis which is inclined to an axial plane of the sleeve at an acute angle, each said land forming a strut operative to deform as a result of axial loading applied to the sleeve whereby to result in a contraction in the axial length of the sleeve, characterised in that each aperture is so shaped that an abrupt change in the direction of the edge of the aperture defines a point at which the adjacent strut starts to deform as a result of stress concentration arising at that point under the applied load, the abrupt change in direction occurs at a position substantially at each axial end of the apertured region defined in the sleeve by the apertures, and the width of the struts in relation to the length of the apertures is such that in the fully contracted condition of the sleeve, the deformed struts lie with their opposite sides adjacent the opposite ends of the deformed apertures.

In use, when deformation of the struts commences, the inclination of the struts progressively increase whereby the part of the sleeve outwardly of the circumferentially-spaced apertures rotates relative to the part of the sleeve inwardly of the apertures and moves towards that part along a generally helical path.

The apertures may be of rectilinear shape, for example formed as a three-sided or foursided figure such as of parallelogram shape with the abrupt change in direction which defines the stress concentration points being at corner portions of the figure. Alternatively, the apertures may be of a curved shape with diametrically-opposed parts of the profile being of a radius sufficiently small as to cause stress concentration at those parts.

According to another aspect of the invention, there is provided a masonry anchor comprising an expansion sleeve as defined above mounted on the shank of a bolt, and an expansion element mounted at the inner end of the shank of the bolt, the expansion element being generally conical so as to cause outwards expansion of the inner end portion of the sleeve when the expansion element is drawn into the inner end portion of the sleeve upon setting the anchor.

Advantageously the configuration of the apertures is such that the struts start to deform to cause axial contraction of the sleeve at a torque loading which is substantially less than a predetermined torque loading at which tightening of the anchor is to occur. In preferred embodiment of the invention the configuration is such that deformation of the struts to cause axial contraction of the sleeve occurs at approximately 30 to 50% of said predetermined torque loading.

Embodiments of the invention will now be described, by way of example only, with reference to the accompanying drawings in which:-
Figure 1 is a perspective view of a masonry anchor in accordance with a preferred embodiment of the invention;
Figure 2 is a side view of an expansion sleeve of the anchor shown in Figure 1;
Figure 3 is a developed view of the sleeve shown in Figure 2;
Figures 4A to 4C are perspective views showing the sleeve, respectively, in a non-contracted state, in a partially contracted state, and in a fully contracted state;
Figure 5 is a developed view showing the sleeve described in patent 559285 for comparative purposes; and
Figures 6 to 8 are developed views of further embodiments of the sleeve in accordance with the invention.

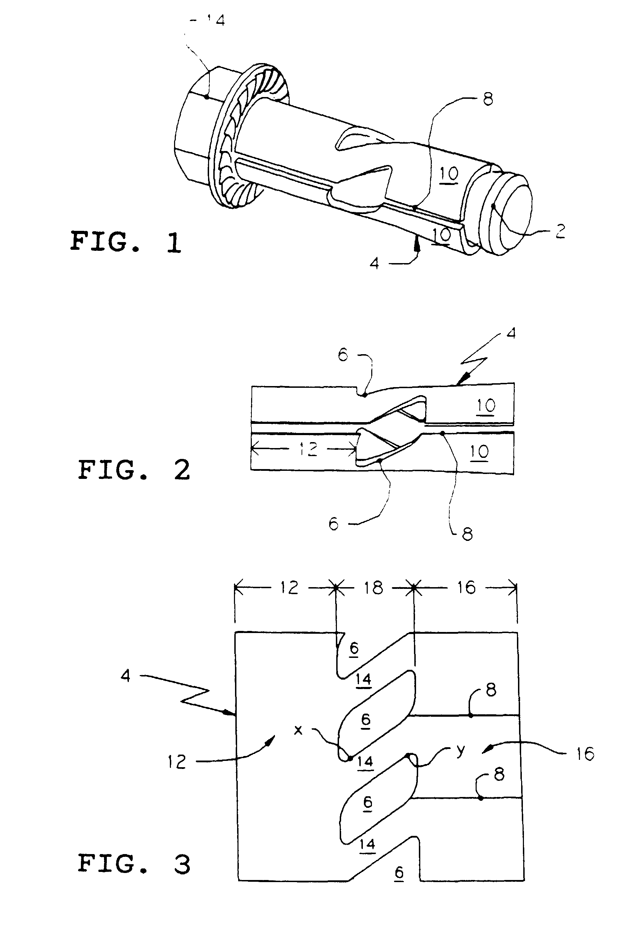

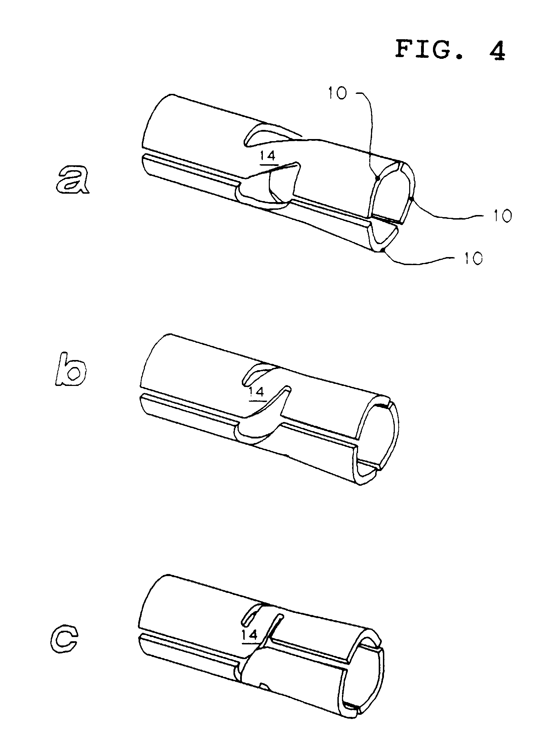

The anchor in accordance with the preferred embodiment of the invention comprises a bolt having at its inner end a conical expansion element 2, and an expansion sleeve 4 of metal mounted on the shank of the bolt outwardly of the conical element 2, the maximum diameter of the conical expansion element 2 being greater than the internal diameter of the sleeve 4 so as to cause radially outwards expansion of the inner end portion of the sleeve when the expansion element is drawn into the end of the sleeve. The expansion of the sleeve 4 is permitted by the incorporation of a series of circumferentially-spaced apertures 6 at an intermediate position along the length of the sleeve, with a longitudinal slit 8 extending from each aperture to the inner end of the sleeve whereby the inner end portion of the sleeve 4 is divided into a series of segments 10 which are displaced outwardly as the conical expansion element 2 is drawn into the end of the sleeve. The sleeve 4 is formed from metal strip folded into cylindrical shape and, as shown in Figures 1 and 4, one of the slits is defined by the opposed edges of the folded strip; for reasons of manufacturing convenience that slit continues outwardly beyond the associated aperture 6 to the outer end of the sleeve, but apart from that, the zone 12 of the sleeve between the outer ends of the apertures 6 and the outer end of the sleeve is uninterrupted. The bolt may be in the form of a stud (as shown) carrying a nut 14 at its outer end in which case the conical expansion element 2 is integral with the shank of the bolt, or alternatively the bolt may have a hexagonal or other head at its outer end in which case the expansion element 2 is threadedly mounted at the inner end of the shank. In either case, rotation of the bolt head or nut will cause the expansion element 2 to be drawn into the expansion sleeve 4 in order to set the anchor within the hole as previously described.

As discussed, the present invention concerns the shape and configuration of the circumferentially-spaced apertures 6 in the sleeve 4 and this will now be described in detail.

As shown in Figure 3, each of the apertures 6 is of elongate shape with the major axis of the aperture inclined to an axial plane of the sleeve. Each pair of adjacent apertures is separated by a land which forms a strut 14 which is inclined to an axial plane of the sleeve by an acute angle which is preferably between about 20° and 45°. In the developed configuration of Figure 3, the struts 14 are parallel. Effectively, the struts 14 form the connection between the zone 12 of the sleeve axially outwardly of the apertures 6, and the zone 16 axially inwardly of the apertures 6. Each strut 14 is inclined such that the outer end of the strut leads the inner end of the strut when considered in the direction of rotation necessary to set the anchor. Axial contraction in the length of the sleeve occurs as a result of deformation of the series of struts 14 whereby the inclination of each of the struts progressively increases and the part of the sleeve axially outwardly of the struts 14 (that is, the zone 12 of the sleeve) rotates relative to the axial part of the sleeve inwardly of the struts 14 (that is, the zone 16 of the sleeve). This action is illustrated in Figures 4A to 4C, in which Figure 4A shows the sleeve prior to contraction, Figure 4C shows the fully contracted condition and Figure 4B shows an intermediate configuration. The progressively-increasing inclination of the struts 14 during contraction can clearly be seen in these figures. In the fully contracted condition as shown in Figure 4C the deformed struts lie with their opposite sides adjacent the opposite ends of the deformed apertures as is clearly shown in the Figure.

In order to obtain axial contraction of the sleeve significantly prior to the maximum torque loading of the anchor, in other words within the range of 30 to 50% of maximum torque loading as previously discussed, it is necessary to achieve an appropriate strut length. However for a given length of sleeve there is in practice a maximum length for the region 18 which includes the apertures which define the struts. On the one hand, the distance between the outer end of the apertured region and the outer end of the sleeve must be sufficient to ensure that when the anchor is set, the shear plane which coincides with the plane of engagement between the outer surface of the masonry and the inner surface of the component being clamped should lie within the solid part (the zone 12) of the sleeve between the apertured area and the outer end in order to maximise the shear strength of the anchor. If the apertured region is extended close to the outer end, the shear plane would then intersect the apertures, and shear would be resisted only by the bolt and not by the combined effects of the bolt and sleeve. On the other hand there is only a relatively narrow range for the distance between the outer end of the apertured region and the inner end of the sleeve. This distance affects the lateral stiffness of the sleeve, in other words the resistance to radial expansion of the sleeve. On the one hand there must be sufficient stiffness to allow assembly of the anchor, either manual or machine assembly, without enlarging the diameter of the sleeve but on the other hand the stiffness of the sleeve should not be too high as to inhibit easy setting of the anchor when in place within the hole. Also, the distance between the inner end of the apertured region and the inner end of the sleeve must be sufficiently great to ensure that in the fully set condition of the anchor the conical expansion element does not enter the apertured region.

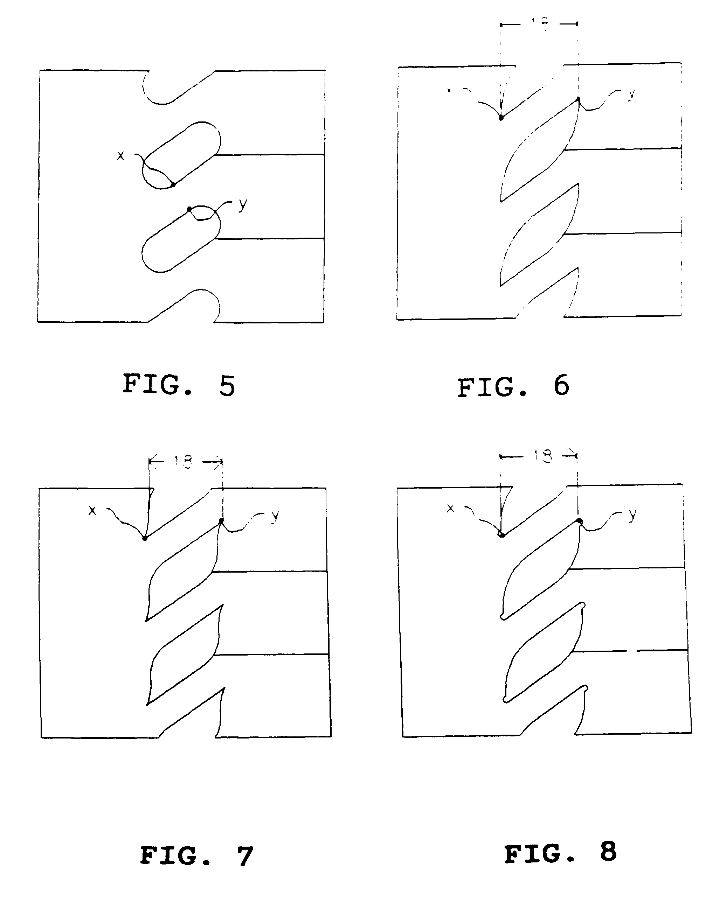

We have determined that for a given length of apertured region 18 the strut length can be maximised by appropriately shaping the apertures. When the strut deforms we have determined that the critical points where deformation is initiated are diametrically opposed points at the outer end portion of the strut at the trailing edge of the strut (in the direction of the applied torque) and at the inner end portion of the strut at the leading edge of the strut (in the direction of the applied torque). In the construction disclosed in our aforesaid patent where the apertures were formed with rounded ends of substantial extent, we determined that the diametrically-opposed points where deformation was initiated occurs were approximately at the ends of the rectilinear sections of the apertures as marked by X and Y in Figure 5 which shows the sleeve of our earlier patent, and the axial distance between these points determines the effective strut length. Further we determined that the actual position of the points at which deformation was initiated varied throughout the range of sleeve sizes and this accounted for the unpredictability in the determination of the force at which strut deformation and hence axial contraction of the sleeve occurred. We have overcome these effects by shaping the apertures so as to provide at diametrically-opposed positions on the strut an abrupt change in the direction of the edge of the aperture. This abrupt change in direction produces a stress concentration at that point whereby deformation of the strut is initiated at that point. Accordingly, the actual diametrically-opposed points at which deformation of the strut is initiated are now accurately determined as a result of the aperture shape and hence at the design stage the torque at which axial contraction is initiated can be determined with substantial accuracy.

From Figure 5 which shows the points X and Y at which collapse is initiated in the sleeve of our earlier patent it will be clearly seen that deformation is initiated at points substantially removed from the outer ends of the apertures and that, therefore, the effective strut length is considerably less than the actual length of the land defined between the apertures. This reduction in effective strut length is one reason why in this prior design axial contraction might not occur until substantial torque application is reached.

In the preferred embodiments of the invention the point at which the abrupt change occurs in the direction of the edge in profile of the aperture and which determines the point at which deformation is initiated, is positioned substantially at the extreme axial end of the aperture so as to maximise the effective strut length for a given length of apertured region 18. As shown in the embodiment of Figures 1 to 4 each aperture 6 is of a parallelogram shape whereby an abrupt change in the direction of the profile occurs at the outer corner and diametrically-opposed inner corner which determine the deformation initiation points X,Y of a strut defined between two adjacent apertures as marked. As will be apparent the deformation initiation points thus formed are in close proximity to the opposed axial ends of the apertured region 18 defined by the apertures 6. It will be appreciated that while, in practice, the corners defined between the adjacent sides of the aperture will not be sharp but will be slightly rounded, nevertheless this rounding will not impede the concentration of stress in the corner portion which can be considered to represent a zone in which the direction of the edge of the aperture abruptly changes.

Although in the embodiment as shown in Figures 1 to 4, the apertures 6 are of rectilinear shape, it is not essential to the invention for the apertures 6 to be of rectilinear shape and other shapes may be adopted which provide at diametrically-opposed points an abrupt change in the direction of the edge of the apertures so as to create stress concentration points at which strut deformation is initiated. Examples of other possible shapes are illustrated in Figures 6 to 8 with the points at which stress concentration occurs for a strut defined between two adjacent apertures being marked X and Y. It will be appreciated that in each of these alternatives the initiation point at which deformation starts is in close proximity to each axial end of the apertured region 18 defined by the apertures, whereby to maximise the effective strut length.

The embodiments have been described by way of example only and modifications are possible within the scope of the invention, as defined by the appended claims.

## Claims

1. An expansion sleeve (4) for a masonry anchor, said sleeve having a plurality of circumferentially-spaced apertures (6) intermediate the ends of the sleeve, and a plurality of slits (8) each extending longitudinally from one of the ends to a respective one of the apertures, said apertures being so shaped that a land is defined between adjacent apertures, said land being elongate and having an axis which is inclined to an axial plane of the sleeve at an acute angle, each said land forming a strut (14) operative to deform as a result of axial loading applied to the sleeve whereby to result in a contraction in the axial length of the sleeve, characterised in that each aperture is so shaped that an abrupt change in the direction of the edge of the aperture defines a point (X, Y) at which the adjacent strut starts to deform as a result of stress concentration arising at that point under the applied load, the abrupt change in direction occurs at a position substantially at each axial end of the apertured region (18) defined in the sleeve by the apertures, and the width of the struts in relation to the length of the apertures is such that in the fully contracted condition of the sleeve, the deformed struts lie with their opposite sides adjacent the opposite ends of the deformed apertures.

2. A sleeve (4) according to claim 1, wherein each strut (14) comprises opposed sides with the respective stress concentration points (X, Y) being on one of said sides at one end of the strut, and on the other of said sides at the opposite end of the strut.

3. A sleeve (4) according to claim 2, wherein said one end of the strut (14) leads the other end of the strut as considered in the direction of rotation to set the anchor, and said one side trails said other side as considered in the direction of rotation to set the anchor by application of torque to the anchor.

4. A sleeve (4) according to any one of claims 1 to 3, wherein the apertures (6) are defined by closed figures with substantially rectilinear sides, with the abrupt changes in direction which define the stress concentration points being at corner portions of each respective aperture.

5. A sleeve (4) according to claim 4, wherein the figure is of paralleogram shape with the stress concentration points being at diametrically-opposed corner portions of the aperture (6).

6. A sleeve (4) according to any one of claims 1 to 3, wherein the apertures (6) are of a curved shape, with diametrically-opposed parts of the shape being of a radius sufficiently small as to cause stress concentration at those parts.

7. A masonry anchor comprising an expansion sleeve (4) as claimed in any one of claims 1 to 6 mounted on the shank of a bolt, and an expansion element (2) mounted at the inner end of the shank of the bolt, the expansion element being generally conical so as to cause outwards expansion of the inner end portion of the sleeve when the expansion element is drawn into the inner end portion of the sleeve upon setting the anchor.

8. An anchor according to claim 7, wherein the configuration of the apertures (6) is such that the struts (14) start to deform to cause axial contraction of the sleeve (4) at a torque loading which is substantially less than a predetermined torque loading at which tightening of the anchor is to occur.

9. An anchor according to claim 8, wherein the configuration is such that deformation of the struts (14) to cause axial contraction of the sleeve (4) occurs at approximately 30 to 50% of said predetermined torque loading.

## Patentansprüche

1. Aufweitungshülse (4) für einen Maueranker, die Hülse ihren Enden mehrere über den Umfang verteilte Ausnehmungen (6) und mehrere Schlitze (8) aufweist, die jeweils von einem der Enden jeweils einer Ausnehmung aus in Längsrichtung verlaufen und so gestaltet sind, daß zwischen benachbarten Ausnehmungen ein länglicher Steg mit einer bezüglich einer Axialebene der Hülse unter einem spitzen Winkel geneigter Steg entsteht, wobei jeder Steg eine Druckstrebe (14) bildet, die sich unter einer auf die Hülse ausgeübten Axiallast verformt und dadurch zu einer Verkürzung der axialen Länge der Hülse führt, dadurch **gekennzeichnet,** daß jede Ausnehmung so gestaltet ist, daß eine abrupte Richtungsänderung der Kante der Ausnehmung einen Punkt (X, Y) definiert, an dem die Verformung der benachbarten Druckstrebe bei einer unter der anliegenden Last an diesem Punkt auftretenden Druckkonzentration beginnt, wobei die abrupte Richtungsänderung an einer Stelle auftritt, die im wesentlichen an jedem axialen Ende des von den Ausnehmungen in der Hülse gebildeten ausgenommenen Bereiches (18) auftritt und wobei die Breite der Druckstreben gegenüber der Länge der Ausnehmungen so gewählt ist, daß im vollständig gekürzten Zustand der Hülse die entgegengesetzten Seiten der verformten Druckstreben an den entgegengesetzten Enden der verformten Ausnehmungen anliegen.

2. Hülse (4) nach Anspruch 1, wobei jede Druckstrebe (14) entgegengesetzte Seiten aufweist und die Spannungskonzentrationspunkte (X, Y) jeweils an einer der Seiten an einem Ende der Druckstrebe liegen und die andere der Seiten sich am entgegengesetzten Ende der Druckstrebe befindet.

3. Hülse (4) nach Anspruch 2, wobei das besagte eine Ende der Druckstrebe (14) gegenüber ihrem anderen Ende in Drehrichtung beim Setzen des Ankers vorauseilt und die besagte eine Seite gegenüber der anderen in Drehrichtung beim Setzen des Ankers unter Einwirken eines Drehmoments auf den Anker nacheilt.

4. Hülse (4) nach einem der Ansprüche 1 bis 3, wobei die Ausnehmungen (6) von geschlossenen Gestaltungen mit im wesentlichen geradlinigen Seiten gebildet sind und die die Spannungskonzentrationspunkte bildenden abrupten Richtungsänderungen an Eckbereichen der jeweiligen Ausnehmungen liegen.

5. Hülse (4) nach Anspruch 4, wobei die Gestaltung parallelogrammformig ist und die Spannungskonzentrationspunkte an diametral gegenüberliegenden Eckbereichen der Ausnehmung (6) liegen.

6. Hülse (4) nach einem der Ansprüche 1 bis 3, wobei die Ausnehmungen (6) gekrümmt geformt sind und diametral gegenüberliegende Teile der Gestaltung einen Radius aufweisen, der klein genug ist, um an diesen Teilen eine Spannungskonzentration zu bewirken.

7. Maueranker mit einer auf dem Schaft eines Bolzens montierten Aufweitungshülse (4) nach einem der Ansprüche 1 bis 6 und einem am inneren Ende des Bolzenschafts montierten Aufweitungselement (2), das generell konisch ist, um eine Aufweitung des inneren Endabschnitts der Hülse nach außen zu bewirken, wenn es beim Setzen des Ankers in den inneren Endabschnitt der Hülse gezogen wird.

8. Anker nach Anspruch 7, wobei die Ausnehmungen (6) so gestaltet sind, daß die eine axiale Zusammenziehung der Hülse (4) bewirkende Verformung der Druckstreben (14) bei einer Drehmomentlast beginnt, die wesentlich geringer ist als eine vorgegebene Drehmomentlast, bei der das Festziehen des Ankers erfolgen soll.

9. Anker nach Anspruch 8, wobei die Gestaltung so getroffen ist, daß die eine axiale Zusammenziehung der Hülse (4) bewirkende Verformung der Druckstreben (14) bei etwa 30 bis 50 % der besagten vorgegebenen Drehmomentlast auftritt.

## Revendications

1. Manchon à expansion (4) pour cheville pour maçonnerie, ledit manchon comportant une pluralité d'ouvertures espacées périphériquement (6) intermédiaires entre les extrémités du manchon, et une pluralité de fentes (8) s'étendant toutes longitudinalement d'une des extrémités à une des ouvertures correspondante, lesdites ouvertures étant conformées de sorte qu'une partie plate soit définie entre des ouvertures adjacentes, ladite partie plate étant allongée et ayant un axe qui est incliné par rapport au plan axial du manchon suivant un angle aigu, chaque dite partie plate formant un élément de structure (14) destiné à se déformer à la suite d'un effort mécanique axial appliqué au manchon d'où il résulte une contraction dans le sens axial du manchon caractérisé en ce que chaque ouverture est conformée de façon qu'un changement brutal de la direction du bord de l'ouverture définit un point (X, Y) au niveau duquel l'élément de structure adjacent commence à se déformer à la suite d'une concentration des contraintes se produisant en ce point sous l'effort appliqué, le changement brutal de direction se produit en un emplacement sensiblement à chaque extrémité axiale de la région ouverte (18) définie dans le manchon par les ouvertures, et la largeur des éléments de structure par rapport à la longueur des ouvertures est telle que, à l'état totalement contracté du manchon, les éléments travaillant à la compression, déformés, ont leurs côtés opposés adjacents aux extrémités opposées des ouvertures déformées.

2. Manchon (4) selon la revendication 1, dans lequel chaque élément de structure (14) comprend des côtés opposés, les points (X, Y) de concentration des contraintes respectifs étant sur l'un desdits côtés à une première extrémité de l'élément de structure, et sur l'autre desdits côtés à l'extrémité opposée de l'élément de structure.

3. Manchon (4) selon la revendication 2, dans lequel ladite première extremité de l'élément de structure (14) guide l'autre extrémité de l'élément de structure lorsque l'on regarde dans la direction de rotation pour mettre en place la cheville, et ledit premier coté est en arrière de l'autre dit côté lorsque l'on regarde dans la direction de rotation pour mettre en place la cheville en appliquant la force de torsion à la cheville.

4. Manchon (4) selon l'une quelconque des revendications 1 à 3, dans lequel les ouvertures (6) sont définies par des figures fermées ayant des côtés sensiblement rectilignes, les changements brutaux de direction qui définissent les points de concentration des contraintes étant situés aux portions formant coin de chaque ouverture correspondante.

5. Manchon (4) selon la revendication 4, dans lequel la figure a la forme d'un parallélogramme dont les points de concentration des contraintes sont situés aux portions diamétralement opposées formant coin de l'ouverture (6).

6. Manchon (4) selon l'une quelconque des revendications 1 à 3, dans lequel les ouvertures (6) ont une forme incurvée dont des parties diamétralement opposées de la forme ont un rayon suffisamment petit pour provoquer une concentration des contraintes dans ces parties.

7. Cheville pour maçonnerie comprenant un manchon à expansion (4) selon l'une quelconque des revendications 1 à 6 monté sur la tige d'un boulon, et un élément à expansion (2) monté à l'extrémité intérieure de la tige de boulon, l'élément à expansion ayant une forme générale cônique de façon à provoquer l'expansion vers l'extérieur de la portion d'extrémité intérieure du manchon lorsque l'élément à expansion est inséré dans la portion d'extrémité intérieure du manchon lors de la mise en place de la cheville.

8. Cheville selon la revendication 7, dans laquelle la configuration des ouvertures (6) est telle que les éléments de structure (14) commence à se déformer pour provoquer la contraction axiale du manchon (4) à une intensité de force de torsion qui est sensiblement inférieure à une intensité de force de torsion prédéterminée à laquelle se produit le serrage de la cheville.

9. Cheville selon la revendication 8, dans laquelle la configuration est telle que la déformation des éléments de structure (14) pour provoquer une contraction axiale du manchon (4) se produit à approximativement 30 à 50% de ladite intensité de force de torsion prédéterminée.
